# EUROPÄISCHE PATENTSCHRIFT

(11) **EP 2 898 271 B1**
(45) Veröffentlichungstag und Bekanntmachung des Hinweises auf die Patenterteilung: **07.06.2017**
(21) Anmeldenummer: 13752874.1
(22) Anmeldetag: 09.08.2013
(51) Int. Cl.: H02S 20/30, H02S 20/00, F24J 2/52, B63B 35/44

(54) **SCHWIMMENDE ENERGIEERZEUGUNGSSYSTEM**
FLOATING POWER GENERATION SYSTEM
SYSTEME FLOTTANT DE PRODUCTION D'ÉNERGIE

(30) Priorität: 18.09.2012 DE 102012108740
(43) Veröffentlichungstag der Anmeldung: 29.07.2015
(73) Patentinhaber: Benecke-Kaliko AG, 30419 Hannover (DE)
(72) Erfinder: HAARBURGER, Tobias, 30167 Hannover (DE); STÖLTING, Andreas, 30989 Gehrden (DE)
(74) Vertreter: Kilsch, Armin Ralph
(86) Internationale Anmeldenummer: PCT/EP2013/066689
(87) Internationale Veröffentlichungsnummer: WO 2014/044466

(56) Entgegenhaltungen:
- WO-A2-2007/062278
- DE-A1- 10 302 746
- DE-A1- 19 857 174
- DE-A1-102006 019 753
- DE-A1-102009 008 067
- FR-A1- 2 958 382
- JP-A- S61 133 673
- KR-A- 20090 037 020

## Beschreibung

Die Erfindung betrifft ein schwimmendes Energieerzeugungssystem für Flüssigkeitsreservoirs nach Anspruch 1.

Schwimmende Energieerzeugungseinrichtungen in Form von photovoltaische Systemen in Verbindung mit Abdeckungen von Wasseroberflächen oder in Wasser eingetauchte photovoltaische Systeme sind im Stand der Technik bekannt.

So offenbart die WO 2008/012791 A1 ein in Wasser integriertes bzw. zur Verwendung in einer Wasser-Umgebung angepasstes photovoltaisches System, bei dem Photovoltaik-Zellen auf einer Folie, einer so genannten Geofolie angebracht sind. Die Geofolie kann dabei auf dem Wasser schwimmend angeordnet sein oder soweit in Wasser eingetaucht schweben, dass die Photovoltaik-Zellen auf der Folie von Wasser überspült und somit gereinigt und gekühlt werden. Unterschiedliche UV resistente Beschichtungsmaterialien aus Polymeren sind ebenso offenbart wie eine aufblasbare Geofolie.

Die US 2010/0294331 Aloffenbart eine Anordnung von Photovoltaik-Zellen, eingebettet in einer Membrane oder angeordnet auf einer Membrane, welche als Abdeckung auf eine Wasserreservoir gelegt wird, also etwa auf die Oberfläche eines Swimmingpools oder eines Teiches, und welche dann der Energieerzeugung dient. Das System als ganzes schwimmt auf dem Wasser oder kann auch eingetaucht betrieben werden.

Die DE 39 19 125 A1 offenbart einen schwimmfähigen Solarzellenkollektor geringer Dichte, dessen Photovoltaik-Zellen wasserdicht in transparenten Kunststoff eingebettet sind, wobei zwischen den Photovoltaik-Zellen Spüllöcher angeordnet sind, welche der Oberflächenreinigung dienen oder zu hohen Wasserdruck bei Wellengang vermeiden sollen.

Die DE 199 08 645 A1 offenbart einen schwimmenden Sonnenkollektor mit einer wasserdicht in transparente Folie eingebetteten Dünnschicht-Photovoltaik, wobei der Kollektor Laschen oder Löcher aufweist, durch die Stäbe aus Holz oder Bambus eingeschoben werden können, die den Kollektor aufspannen und die Schwimmfähigkeit sichern.

Die DE 198 57 174 A1 offenbart ein im Wasser schwimmendes Solarfoliensystem, bei dem die die Photovoltaik tragende Folie zwischen einer unteren Bodenfolie und einer transparenten Deckfolie eingeschweißt ist und bei dem zwischen den Folien Zwischenräume vorgesehen sind, die einerseits zur Regulierung der Eintauchtiefe unter Einsatz von z. B. Preßluft mit Luft gefüllt werden können um dadurch das Schwimmen des Solarkollektors an der Oberfläche zu erleichtern. Andererseits können dort die Zwischenräume zur Erzielung einer gleichzeitigen Linsen-Wirkung mit leichten Flüssigkeiten, wie etwa Alkohol, gefüllt werden.

Die WO 2010/026542 A1 Aloffenbart zur Erzeugung von elektrischer Energie eine Anordnung von Photovoltaik-Zellen auf einer in Wasser eingetauchten oder auf dem Wasser schwimmenden plattenförmigen festen Struktur (panel). Die Photovoltaik-Zellen können flach aufgelegt oder über Gestänge verstellbar ausgebildet sein. Die Tauchtiefe der Struktur kann beliebig eingestellt werden von "Schwimmen" auf der Oberfläche bis "Tauchen" in z.B. zwei Metern Tiefe. Dies geschieht über Schwimmkörper ("floats"), die mit Luft gefüllt oder mit Flüssigkeiten mit zum Wasser unterschiedlicher Dichte geflutet werden können. Das Dokument DE10302746 A1 zeigt ein schwimmendes Energieerzeugungssystem entsprechend dem Oberbegriff des Anspruchs 1 auf.

Den bisher im Stand der Technik bekannten Lösungen schwimmender photovoltaischer Systeme haftet der Nachteil an, dass der erforderliche Auftrieb bei gleichzeitiger Festigkeit der Trägerfolien oder photovoltaischen Elemente nur durch ausreichend starke und damit dicke und teuer zu fertigende Folien oder komplizierte Spann- oder Schwimmkörpersysteme erreicht werden kann.

Der Unterbau von z. B. Photovoltaik Modulen muss daher im Gegensatz zu einem festen Untergrund über ausreichend Auftrieb verfügen. Ferner muss dieser Unterbau ein Gewicht von ca. 40 kg und mehr tragen können. Die Montage muss einfach sein, so dass mehrere tausend Module für Kraftwerksanwendungen mit einem geringen Maschineneinsatz und im Wesentlichen durch Handarbeit zusammengesetzt werden können. Der Unterbau muss zudem zum Betrieb in warmen semi-ariden Gebieten, d.h. in Gebieten, in denen der Niederschlag unterhalb der möglichen Gesamtverdunstung liegt, besonders widerstandsfähig gegenüber Witterungsbedingungen sein.

Für die Erfindung bestand daher die Aufgabe, ein schwimmendes Energieerzeugungssystem bereitzustellen, das einfach zu montieren ist, einen genügenden und einstellbaren Auftrieb aufweist und das einfach und günstig herzustellen und zu warten ist.

Gelöst wird diese Aufgabe durch die Merkmale des Hauptanspruchs. Weitere vorteilhafte Ausbildungen sind in den Unteransprüchen offenbart.

Dabei weisen die Trag- oder Schwimmkörper der Energieerzeugungseinrichtung eine oder mehrere mit einem Medium/Auftriebsmedium befüllbare abgedichtete Kammern sowie steuerbare oder regelbare Ventileinrichtungen zum Befüllen und Ablassen des Mediums in bzw. aus den Kammern auf. Außerdem sind eine Druckquelle und eine Einrichtung zur Steuerung der Befüllung der Kammern mit Medium vorgesehen. Das Medium kann Luft sein oder eine Flüssigkeit, die wesentlich leichter ist als die Flüssigkeit des Flüssigkeitsreservoirs. Die Kammern sind dabei in Relation zu den Modulen so angeordnet, dass durch die Befüllung der Kammern Form und Ausdehnung oder Auftrieb der Trag- oder Schwimmkörper und/oder die Lage oder Ausrichtung der flächigen Module änderbar ist.

Auf diese Weise lässt sich eine beliebige Anzahl von flächigen Modulen zur Energieerzeugung und/oder Energieumwandlung auf einfache Art zu einer Energieerzeugungseinrichtung zusammenbauen. Die Formveränderung der Trag- oder Schwimmkörper kann die Lastaufnahmeposition verändern, wobei z.B. ein Tragkörper eine Keilform in die eine oder andere Richtung annehmen kann. Dadurch verschwenken auch das bzw. die mit dem Trag- oder Schwimmkörper verbundenen flächigen Module zur Energieerzeugung und können z.B. in eine in Bezug auf die Sonneneinstrahlung möglichst effektive Lage gebracht werden.

So kann z.B. auch ein flächiges Modul, das beidseitig mit zwei gleich großen Trag- oder Schwimmkörpern verbunden ist, durch vollständiges Füllen und damit maximale Ausdehnung der beiden Trag- oder Schwimmkörper, dem Modul eine horizontale Ausrichtung gegeben werden, wenn die Sonne im Zenit steht, was in Äquatornahe der Fall ist.

Vorteilhafterweise sind solche flächigen Module als Wärmetauscher, also thermische arbeitende Sonnenkollektoren oder als Solarmodule bzw. Photovoltaik-Zellen ausgebildet. Wärmetauscher oder Solarkollektoren arbeiten z.B. mit einem Kühlmittel, welches durch Sonneneinstrahlung in den Modulen verdampft, unter Wärmeabgabe wieder kondensiert und die Wärme zur Energieerzeugung liefert. Solarmodule wandeln z.B. Sonnenlicht direkt in elektrische Energie um, wobei das Modul aus Solarzellen bzw. Photovoltaik-Zellen besteht, die in Serie oder parallel geschaltet sind.

Eine weitere vorteilhafte Ausbildung besteht darin, dass die Trag- oder Schwimmkörper zylindrisch ausgebildet und parallel zueinander angeordnet sind Der Tragkörper kann aus zwei parallel angeordneten, zylindrischen Körpern bestehen. Diese Körper können denselben oder einen unterschiedlichen Durchmesser haben. Eine gesteuerte pneumatische Anlage steuert den Durchmesser der zylindrischen Körper und es entsteht eine Neigung, oder eine horizontale Ausrichtung des z.B. auf zwei parallelen Tragkörpern angeordneten Photovoltaik Moduls. Eine solche variable Neigung nach links oder rechts dient der möglichst idealen Nutzung der Sonneneinstrahlung.

Eine weitere vorteilhafte Ausbildung besteht darin, dass mehrere Trag- oder Schwimmkörper miteinander verbunden sind, vorzugsweise über eine mechanische, lösbare Verbindung oder über eine Klebeverbindung. Werden so z.B. mehrere Photovoltaik Module in Reihe über eine mechanische Verbindung wie z.b. einen Klettverschluss in einer brückenähnlichen Anordnung auf die zwei zylindrische Körper aufgelegt. Der Tragkörper kann in seinen Ausmaßen so sein, dass mehrere Photovoltaik-Zellen auf ihm befestigt werden können. So lassen sich mehrere hintereinander liegende Reihen schaltungsmäßig verbundenen liegenden Photovoltaik Modulen auf den Tragkörpern anbringen, so dass auf einfache Weise die gesamte Wasserfläche des Reservoirs ausgenutzt werden kann.

Eine weitere vorteilhafte Ausbildung besteht darin, dass die Module als starre, selbsttragend Körper ausgebildet und mit einem oder mehreren Trag- oder Schwimmkörper zu einem separaten Ponton-förmigen Schwimmsystem verbunden sind. Solche Pontons sind lagestabil und können bei entsprechender Auslegung auch zu Wartungsarbeiten betreten werden.

Eine weitere vorteilhafte Ausbildung besteht darin, dass die Trag- oder Schwimmkörper, insbesondere in starrer Ausführung, von vornherein Einrichtungen zur Aufnahme von Kabeln, Steuerleitungen oder Mediumsleitungen aufweisen oder dass die Trag- oder Schwimmkörper solche Leitungen bereits integriert aufweisen, die aneinander anschließbar sind. Damit erleichtert sich ebenfalls die Montage der Verdrahtung/ Verkabelung der Module

Eine weitere vorteilhafte Ausbildung besteht darin, dass mehrere Trag- oder Schwimmkörper zu Gruppen zusammengeschaltet werden die gemeinsam mit Medium befüllt oder von Medium entlastet werden, d.h. es wird aus mehreren Trag- oder Schwimmkörper gemeinsam Medium abgelassen. Damit vereinfachen sich Teile der Steuerung und der Zuleitungen bei gleichzeitiger Verbesserung des Wirkungsgrads. Letzteres geschieht durch die Einsparung von Leitungsmaterial und durch Verminderung des Energieeintrags (Pumpenkapazität) zum Transport der Strömungsmengen bzw. Volumenströme.

Eine weitere vorteilhafte, weil erprobt auch in großen Mengen einfach herstellbare Ausbildung besteht darin, dass die Trag- oder Schwimmkörper aus polymerem und/oder elastomerem Kunststoff oder aus einer Kautschukmischung, landläufig Gummi, bestehen.

Eine weitere vorteilhafte Ausbildung besteht darin, dass die Trag- oder Schwimmkörper unterschiedlich groß ausgebildet sind. Das erleichtert die Ausbildung statisch ausgerichteter Systeme, die z. B. nach der Hauptrichtung der Sonneneinstrahlung "fest" montiert sind. Das schwimmende Energieerzeugungssystem lässt sich auch in Verbindung mit schon bestehenden Abdecksystemen nutzen, da das Energieerzeugungssystem auf einer ein Flüssigkeitsreservoir abdeckenden Folie angeordnet und verbunden wird. Die Tragkörper können hier im Zuge der Auslegung der in aller Regel schwimmenden Folie über eine geeignete Verbindungstechnik angebracht werden. In Frage kommt hier eine lösbare mechanische Verbindung zwischen Tragkörper und Folie, z. B. eine Art Klettverbindung oder eine Klebeverbindung.

Weiterhin lässt sich ein erfindungsgemäßes schwimmendes Energieerzeugungssystem in besonderer Weise bereitstellen, wenn die Trag- oder Schwimmkörper mittels an letzteren dichtend anschließenden Folien so miteinander verbunden sind, dass die Oberfläche eines Flüssigkeitsreservoirs im Wesentlichen abgedeckt wird. Die so entstandene Abdeckung durch miteinander verbundenen Folienteilen und Trag- oder Schwimmkörpern kann so ausgebildet werden, dass an den Rändern des Flüssigkeitsreservoirs sich Folienbereiche befinden, die an den Rändern des Flüssigkeitsreservoirs fixiert werden können, so dass eine verdunstungsdichte Abdeckung entsteht.

In beiden Fällen ergibt sich zunächst der Vorteil auf, dass das Wasser des Flüssigkeitsreservoirs nicht verdunsten kann, was bei Reservoiren mit großen Oberflächen gerade in heißen Gegenden von entscheidender Bedeutung ist. Andererseits ergibt sich eine vorteilhafte Ausnutzung der Gesamtflache der schwimmfähigen Wasserabdeckfolie auf dem Reservoir und es gestattet sich darüberhinaus über die tragende Folie ein Zugang zu den einzelnen Modulen für Wartungsarbeiten an einzelnen Photovoltaik Modulen, bzw. ihren Tragkörpern. Die Trag- oder Schwimmkörper und die in aller Regel schwimmfähige Folie bilden dabei ein gemeinsames Tragsystem, welches größere und schwerere Module erlaubt als bisher und zudem einen "trockenen" Zugang ermöglicht. Eine symmetrische Anordnung der Trag- oder Schwimmkörper, welche auf der Folie genügend Abstand zwischen den Trag- oder Schwimmkörpern für Gehwege bereitstellt, bietet dafür ausreichende Möglichkeiten. Ein erfindungsgemäßes schwimmendes Energieerzeugungssystems mit Trag- oder Schwimmkörper auf einer Abdeckfolie lässt sich in besonders vorteilhafter Weise auf einem (oberen) Stausee eines Pumpspeicherwerks verwenden. Damit kann die für die hydraulische Speicherung erforderliche Pumpenergie zur Förderung auf "Hochniveau" mindestens teilweise über die auf der Oberfläche des Stausees angeordnete Energieerzeugungseinrichtung erzeugt werden, was den Effizienzgrad solcher Pumpspeicherwerke enorm steigert. Ein erfindungsgemäßes schwimmendes Energieerzeugungssystems mit Trag- oder Schwimmkörper auf einer Abdeckfolie lässt sich gleichermaßen vorteilhaft auf miteinander verbundenen Flüssigkeitsreservoirs verwenden. Flüssigkeitsreservoirs bzw. Wasserreservoirs in semi-ariden Gebieten bekommen damit eine zweite wichtige Funktion. Sie können nunmehr auch unabhängig von einem Anschluss an die Stromversorgung und ohne einen mit Kraftstoff zu versorgenden Stromgenerator zur Wasserlagerung und als Pumpstation genutzt werden. Mehrere über ein Rohrleitungsnetz verbundene Wasserreservoirs können weiträumig als hydraulische Puffer genutzt werden. Ein solches System dient dann der Wasser- und Stromversorgung in semi-ariden Gebieten genauso wie in urbanen und landwirtschaftlich genutzten Räumen.

Für die Anwendung mit Trinkwasserreservoirs sollten mindestens die mit der Flüssigkeitsoberfläche in Berührung kommenden Teile der Einrichtung, also solche Teile der Trag- oder Schwimmkörper, der evtl. vorhandenen Abdeckfolie und auch der Module aus lebensmittelrechtlich unbedenklichen Kunststoffmaterialen bestehen, z. B. gemäß der jeweils gültigen Ausführung des US Standard NSF/ANSI 61, z.B der NSF/ANSI 61-2010a oder anderen nationalen oder internationalen lebensmittelrechtlichen oder wasserrechtlichen Standards oder Normen ausgebildet sind. Damit ist ohne Weiteres eine Anwendung für Trinkwasserreservoire möglich.

Anhand eines Ausführungsbeispieles soll die Erfindung näher erläutert werden. Es zeigen
- Fig. 1a: eine schwimmende Energieerzeugungseinrichtung mit waagerecht ausgerichtetem Photovoltaik-Modul die nicht Teil der vorliegenden Erfindung ist Fig. 1b eine Energieerzeugungseinrichtung gemäß Fig. 1a mit geneigtem Photovoltaik-Modul
- Fig. 2a: eine erfindungsgemäße schwimmende Energieerzeugungseinrichtung mit waagerecht ausgerichtetem Photovoltaik-Modul auf einer Folie zur Abdeckung eines Flüssigkeitsreservoirs
- Fig. 2b: eine Energieerzeugungseinrichtung gemäß Fig. 2a mit geneigtem Photovoltaik-Modul
- Fig. 3: eine erfindungsgemäße schwimmende Energieerzeugungseinrichtung mit Trag- oder Schwimmkörpern unterschiedlicher Größe auf einer Folie zur Abdeckung eines Flüssigkeitsreservoirs

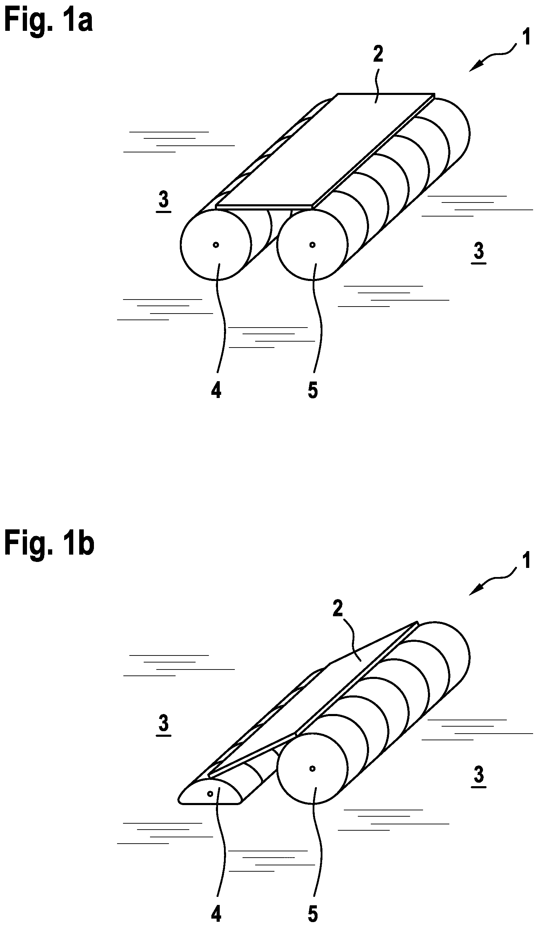

Die Fig. 1a zeigt eine schwimmende Energieerzeugungseinrichtung 1, die nicht Teil der vorliegenden Erfindung ist, welche ein flächiges Modul zur Energieerzeugung 2 aufweist, nämlich ein flächiges Photovoltaik-Modul, welches mit zwei direkt auf der Wasseroberfläche 3 eines Flüssigkeitsreservoirs schwimmenden Trag- oder Schwimmkörpern 4 und 5 verbunden ist. Die Trag- oder Schwimmkörper 4 und 5 bestehen aus einer Kautschukmischung, d.h. aus Gummi, und sind durch schraubenförmige Wicklung miteinander vulkanisierter Gummistreifen hergestellt.

Die Trag- oder Schwimmkörper 4 und 5 sind zylindrisch ausgebildet und parallel zueinander angeordnet, weisen eine mit Luft befüllbare abgedichtete Kammer und sind mit hier nicht näher dargestellten steuerbaren Ventileinrichtungen, einem Kompressor als Druckquelle und einer pneumatischen bzw. elektronischen Steuereinrichtung zum Befüllen und Ablassen des Mediums Luft verbunden.

Durch die jeweilige Befüllung der Kammern der Trag- oder Schwimmkörper 4 und 5 ist die Form der Kammern und damit der Trag- oder Schwimmkörper 4 und 5 und deren Ausdehnung veränderbar und damit natürlich auch die Lage und Ausrichtung bzw.

Neigung der Module einstellbar.

Dies zeigt deutlich die Zusammenschau der Fig. 1a und 1b. Während in der Fig. 1a beide Trag- oder Schwimmkörper 4 und 5 mit annähernd gleichem Druck in ihren Kammern beaufschlagt sind und daher in Form und Ausdehnung etwa gleich ausgebildet sind, ist in der Fig. 1b die Kammer des Trag- oder Schwimmkörpers 4 druckentlastet, wodurch dieser Trag- oder Schwimmkörper seine Form in eine flache Blase ändert.

Das führt dazu, dass in dem in der Fig. 1a dargestellten Zustand das Photovoltaik-Modul 2 nahezu waagerecht bzw. horizontal ausgerichtet ist und etwa in der Mittagszeit in Äquatornähe, wenn die Sonnen im Zenit steht, einen besonders guten Wirkungsgrad erreicht. In anderen Zeiten mit z.B. schräger Sonneneinstrahlung, kann das Photovoltaik-Modul 2 dann durch Druckentlastung in den Kammern der Trag- oder Schwimmkörper in zwei Richtungen geneigt werden. Die Fig. 1b zeigt eine dieser möglichen Neigungen durch die Druckentlastung der Kammer des Trag- oder Schwimmkörpers 4 und den Druckerhalt in der Kammer des Trag- oder Schwimmkörpers 5. So kann etwa über einen Tagesverlauf immer eine optimale Stellung des Photovoltaik-Modul 2 zur Sonneneinstrahlung eingestellt werden. Auch kann eine feststehende Neigung eingestellt werden, wenn beispielsweise solche schwimmenden Energieerzeugungseinrichtungen für Flüssigkeitsreservoirs außerhalb der Äquatorzonen oder gar nördlich oder südlich der Wendekreise genutzt werden.

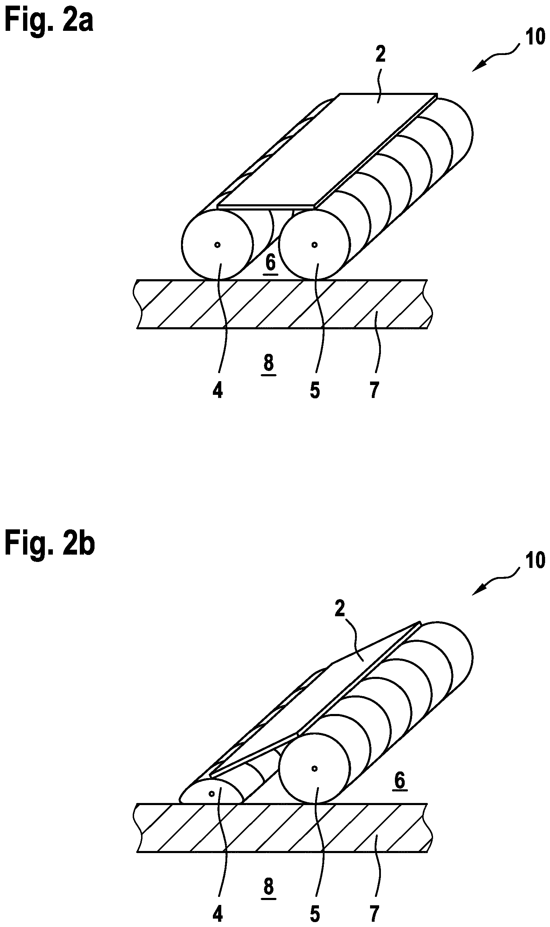

Während bei der in den Fig. 1a und 1b dargestellten schwimmenden Energieerzeugungseinrichtung das Photovoltaik-Modul 2 als starre, selbsttragend Körper ausgebildet ist und mit den beiden Trag- oder Schwimmkörpern 4 und 5 ein separates Ponton-förmigen Schwimmsystem bilden, zeigen die Fig. 2a und 2b entsprechend der vorliegenden Erfindung ein Energieerzeugungssystem, bei dem eine Energieerzeugungseinrichtung 10 auf der Folienoberfläche 6 einer ein Flüssigkeitsreservoir 8 abdeckenden, in aller Regel schwimmenden Folie 7 angeordnet und mit letzterer verbunden ist.

Auch hier zeigt die Zusammenschau der Fig. 2a und 2b, dass in der bereits dargestellten Art und Weise beide Trag- oder Schwimmkörper 4 und 5 entweder mit annähernd gleichem Druck in ihren Kammern beaufschlagt und in Form und Ausdehnung etwa gleich ausgebildet sind, oder das ein Trag- oder Schwimmkörpers 4 druckentlastet ist und seine Form in eine flache Blase ändert.

Das führt auch hier dazu, dass das Photovoltaik-Modul 2 in der Fig. 2a nahezu waagerecht bzw. horizontal ausgerichtet und in der Fig. 2b eine Neigung eingestellt ist.

Das in den Fig. 2a und 2b dargestellte Energieerzeugungssystem, bei dem eine Energieerzeugungseinrichtung 10 auf einer Folie 7 angeordnet ist, mit der ein Flüssigkeitsreservoir 8 abgedeckt ist, weist natürlich den wesentlichen Vorteil auf, dass das Wasser des Flüssigkeitsreservoirs nicht verdunsten kann, was bei Reservoiren mit großen Oberflächen gerade in heißen Gegenden von entscheidender Bedeutung ist.

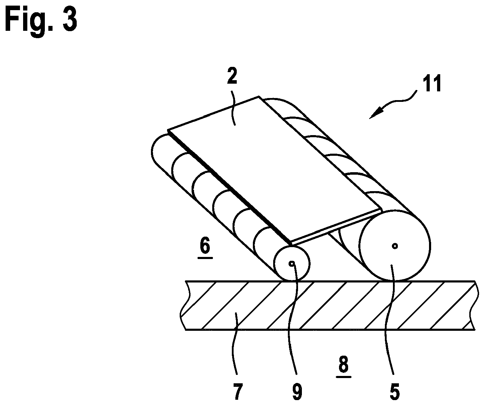

Fig. 3 zeigt ein Energieerzeugungssystem mit einer weiteren Ausführungsform einer erfindungsgemäßen Energieerzeugungseinrichtung 11 in einer Anordnung auf der Oberfläche 6 einer Folie 7, mit der ein Flüssigkeitsreservoir 8 abgedeckt ist.

Hier ist das Photovoltaik-Modul 2 mit zwei unterschiedlich groß ausgebildeten Trag- oder Schwimmkörpern 5 und 9 verbunden, wodurch eine voreingestellte Neigung entsteht, die u.a. Vorteile bei der Lageausrichtung schwimmender Energieerzeugungseinrichtungen aufweist durch einen dann möglichen verringerten Aufwand bei der pneumatischen bzw. elektronischen Steuereinrichtung zum Befüllen und Ablassen des Mediums.

### Bezugszeichenliste

### (Teil der Beschreibung)

- 1: Energieerzeugungseinrichtung
- 2: Flächiges Modul zur Energieerzeugung
- 3: Wasseroberfläche
- 4: Trag- oder Schwimmkörper
- 5: Trag- oder Schwimmkörper
- 6: Folienoberfläche
- 7: Abdeckfolie für Flüssigkeitsreservoir
- 8: Flüssigkeitsreservoir
- 9: Trag- oder Schwimmkörper
- 10: Energieerzeugungseinrichtung
- 11: Energieerzeugungseinrichtung

## Patentansprüche

1. Schwimmendes Energieerzeugungssystem, das eine ein Flüssigkeitsreservoir (8) abdeckende Folie (7) und eine Energieerzeugungseinrichtung (1) aufweist, wobei die Energieerzeugungseinrichtung (1) ein oder mehrere Module (2) zur Energieerzeugung und/oder Energieumwandlung aufweist, vorzugsweise Photovoltaik-Zellen oder Sonnenkollektoren, die mit mindestens einem Trag- oder Schwimmkörper (4, 5, 9) verbunden sind, **dadurch gekennzeichnet, dass**
- die Energieerzeugungseinrichtung (1) ein oder mehrere flächige Module (2) aufweist und auf einer Oberfläche (6) der Folie (7) angeordnet und mit letzterer verbunden ist, und dass
- die Trag- oder Schwimmkörper (4, 5, 9) eine oder mehrere mit einem Medium befüllbare abgedichtete Kammern sowie steuerbare oder regelbare Ventileinrichtungen zum Befüllen und Ablassen des Mediums in bzw. aus den Kammern aufweisen, und dass
- eine Druckquelle und eine Einrichtung zur Steuerung der Befüllung mindestens einer der Kammern mit Medium vorgesehen ist, und dass
- die Kammern in Relation zu den Modulen so angeordnet sind, dass durch die Befüllung der Kammern Form und Ausdehnung oder der Auftrieb der Trag- oder Schwimmkörper (4, 5, 9) und/oder die Lage oder Ausrichtung der flächigen Module (2) änderbar ist.

2. Schwimmendes Energieerzeugungssystem nach Anspruch 1, bei der die Trag- oder Schwimmkörper (4, 5, 9) zylindrisch ausgebildet und parallel zueinander angeordnet sind.

3. Schwimmendes Energieerzeugungssystem nach Anspruch 1 oder 2, bei der mehrere Trag- oder Schwimmkörper (4, 5, 9) miteinander verbunden sind, vorzugsweise über eine mechanische, lösbare Verbindung oder über eine Klebeverbindung.

4. Schwimmendes Energieerzeugungssystem nach einem der Ansprüche 1 bis 3, bei der die Module (2) als starre, selbsttragend Körper ausgebildet und mit einem oder mehreren Trag- oder Schwimmkörper (4, 5, 9) zu einem separaten Ponton-förmigen Schwimmsystem verbunden sind.

5. Schwimmendes Energieerzeugungssystem nach einem der Ansprüche 1 bis 4, bei der die Trag- oder Schwimmkörper (4, 5, 9) Einrichtungen zur Aufnahme von Kabeln, Steuerleitungen oder Mediumsleitungen aufweisen oder bei der die Trag- oder Schwimmkörper solche Leitungen bereits integriert aufweisen.

6. Schwimmendes Energieerzeugungssystem nach einem der Ansprüche 1 bis 5, bei der mehrere Trag- oder Schwimmkörper zu Gruppen zusammengeschaltet werden die gemeinsam mit Medium befüllt oder von Medium entlastet werden.

7. Schwimmendes Energieerzeugungssystem nach einem der Ansprüche 1 bis 6, bei der die Trag- oder Schwimmkörper (4, 5, 9) aus polymerem und/oder elastomerem Kunststoff oder aus einer Kautschukmischung bestehen.

8. Schwimmendes Energieerzeugungssystem nach einem der Ansprüche 1 bis 7, bei der die Trag- oder Schwimmkörper (5, 9) unterschiedlich groß ausgebildet sind.

9. Schwimmendes Energieerzeugungssystem nach einem der Ansprüche 1 bis 8, bei dem die Trag- oder Schwimmkörper (4, 5, 9) mittels an letzteren dichtend anschließenden Folien miteinander so verbunden sind, dass die Oberfläche (3) eines Flüssigkeitsreservoirs abgedeckt wird.

10. Verwendung eines schwimmenden Energieerzeugungssystems nach einem der Ansprüche 1 bis 9 auf einem Stausee eines Pumpspeicherwerks oder auf miteinander verbundenen Flüssigkeitsreservoirs.

## Claims

1. Floating power generation system, which has a sheet (7) covering a liquid reservoir (8) and a power generation unit (1), wherein the power generation unit (1) has one or more modules (2) for power generation and/or power conversion, preferably photovoltaic cells or solar collectors, which are connected to at least one supporting body or float (4, 5, 9), **characterized in that**
- the power generation unit (1) has one or more flat modules (2) and is arranged on a surface (6) of the sheet (7) and is connected to said sheet, and **in that**
- the supporting bodies or floats (4, 5, 9) have one or more sealed chambers that can be filled with a medium and also controllable or adjustable valve devices for filling and draining the medium into and out of the chambers, and **in that**
- a pressure source and a device for controlling the filling of at least one of the chambers with medium are provided, and **in that**
- the chambers are arranged in relation to the modules in such a way that the shape and extent or buoyancy of the supporting bodies or floats (4, 5, 9) and/or the position or alignment of the flat modules (2) can be varied by the filling of the chambers.

2. Floating power generation system according to Claim 1, in which the supporting bodies or floats (4, 5, 9) are cylindrically formed and arranged parallel to one another.

3. Floating power generation system according to Claim 1 or 2, in which a number of supporting bodies or floats (4, 5, 9) are connected to one another, preferably by way of a mechanical, releasable connection or by way of an adhesively bonded connection.

4. Floating power generation system according to one of Claims 1 to 3, in which the modules (2) are formed as rigid, self-supporting bodies and are connected to one or more supporting bodies or floats (4, 5, 9) to form a separate pontoon-like floating system.

5. Floating power generation system according to one of Claims 1 to 4, in which the supporting bodies or floats (4, 5, 9) have devices for receiving cables, control lines or media lines or in which the supporting bodies or floats have such lines already integrated.

6. Floating power generation system according to one of Claims 1 to 5, in which a number of supporting bodies or floats are fitted together to form groups that are jointly filled with medium or relieved of medium.

7. Floating power generation system according to one of Claims 1 to 6, in which the supporting bodies or floats (4, 5, 9) consist of polymeric and/or elastomeric material or of a rubber mixture.

8. Floating power generation unit according to one of Claims 1 to 7, in which the supporting bodies or floats (5, 9) are formed in different sizes.

9. Floating power generation system according to one of Claims 1 to 8, in which the supporting bodies or floats (4, 5, 9) are connected to one another by means of sheets adjoining the latter in a sealing manner in such a way that the surface (3) of a liquid reservoir is covered.

10. Use of a floating power generation system according to one of Claims 1 to 9 on a reservoir of a pumped storage plant or on interconnected liquid reservoirs.

## Revendications

1. Système générateur d'énergie flottant, lequel possède un film (7) qui recouvre un réservoir à liquide (8) et un dispositif de génération d'énergie (1), le dispositif de génération d'énergie (1) possédant un ou plusieurs modules (2) de génération d'énergie et/ou de conversion d'énergie, de préférence des cellules photovoltaïques ou des collecteurs solaires, qui sont reliés à au moins un corps porteur ou flottant (4, 5, 9), **caractérisé en ce que**
- le dispositif de génération d'énergie (1) possède un ou plusieurs modules plats (2) et il est disposé sur une surface (6) du film (7) et relié à ce dernier, et **en ce que**
- les corps porteurs ou flottants (4, 5, 9) possèdent une ou plusieurs chambres rendues étanches qui peuvent être remplies avec un fluide ainsi que des dispositifs à vanne commandables ou régulables destinés au déversement et à l'évacuation du fluide dans ou hors des chambres, et **en ce que**
- il existe une source de pression et un dispositif de commande du remplissage d'au moins l'une des chambres avec du fluide, et **en ce que**
- les chambres sont disposées en relation avec les modules de telle sorte que la forme et l'expansion ou la flottabilité des corps porteurs ou flottants (4, 5, 9) et/ou la position ou l'orientation des modules plats (2) peuvent être modifiés par le remplissage des chambres.

2. Système générateur d'énergie flottant selon la revendication 1, avec lequel les corps porteurs ou flottants (4, 5, 9) sont de configuration cylindrique et sont disposés parallèlement les uns aux autres.

3. Système générateur d'énergie flottant selon la revendication 1 ou 2, avec lequel plusieurs corps porteurs ou flottants (4, 5, 9) sont reliés entre eux, de préférence par le biais d'une liaison mécanique amovible ou par le biais d'une liaison collée.

4. Système générateur d'énergie flottant selon l'une des revendications 1 à 3, avec lequel les modules (2) sont réalisés sous la forme de corps rigides autoporteurs et sont reliés à un ou plusieurs corps porteurs ou flottants (4, 5, 9) en un système flottant en forme de ponton séparé.

5. Système générateur d'énergie flottant selon l'une des revendications 1 à 4, avec lequel les corps porteurs ou flottants (4, 5, 9) possèdent des dispositifs destinés à accueillir des câbles, des lignes de commande ou des conduites à fluide ou avec lequel les corps porteurs ou flottants possèdent de telles lignes et conduites déjà intégrées.

6. Système générateur d'énergie flottant selon l'une des revendications 1 à 5, avec lequel les plusieurs corps porteurs ou flottants sont interconnectés en groupes qui sont remplis d'un fluide ou desquels un fluide est déchargé en commun.

7. Système générateur d'énergie flottant selon l'une des revendications 1 à 6, avec lequel les corps porteurs ou flottants (4, 5, 9) sont constitués de matière plastique polymère et/ou élastomère ou d'un mélange de caoutchouc.

8. Système générateur d'énergie flottant selon l'une des revendications 1 à 7, avec lequel les corps porteurs ou flottants (5, 9) sont réalisés dans des tailles différentes.

9. Système générateur d'énergie flottant selon l'une des revendications 1 à 8, avec lequel les corps porteurs ou flottants (4, 5, 9) sont reliés ensemble au moyen de films attachés de manière étanche au dernier de telle sorte que la surface (3) d'un réservoir à liquide est recouverte.

10. Utilisation d'un système générateur d'énergie flottant selon l'une des revendications 1 à 9 sur un lac de retenue d'un ouvrage d'accumulation par pompage ou sur des réservoirs à liquide reliés entre eux.
